Europäisches Patentamt

**European Patent Office**

**Office européen des brevets**

(11) Numéro de publication: **0 337 043 B1**

(12) **FASCICULE DE BREVET EUROPEEN**

(45) Date de publication de fascicule du brevet: **09.09.92** (51) Int. Cl.⁵: **B62B 3/10**

(21) Numéro de dépôt: **88401753.4**

(22) Date de dépôt: **05.07.88**

(54) **Chariot d'achat comportant une corbeille pivotante.**

(30) Priorité: **06.04.88 FR 8804505**

(43) Date de publication de la demande:
**18.10.89 Bulletin 89/42**

(45) Mention de la délivrance du brevet:
**09.09.92 Bulletin 92/37**

(84) Etats contractants désignés:
**CH DE ES GB IT LI NL**

(56) Documents cités:
**FR-A- 1 423 726**
**US-A- 3 751 059**
**US-A- 4 373 611**
**US-A- 4 560 180**

(73) Titulaire: **ATELIERS REUNIS CADDIE**
**13, rue de la Mairie**
**F-67300 Schiltigheim(FR)**

(72) Inventeur: **Le Marchand, Alain**
**1, rue de Vendée**
**F-67116 Reichstett(FR)**
Inventeur: **Bailly, Daniel**
**63, Avenue de Périgueux**
**F-67800 Bischheim(FR)**

(74) Mandataire: **Boutin, Antoine**
**Cabinet Tony-Durand, 77, Rue Boissière**
**F-75116 Paris(FR)**

Rank Xerox (UK) Business Services

## Description

La présente invention est relative aux chariots d'achat mis à la disposition de la clientèle dans les magasins en libre-service.

Plus précisément, elle concerne les chariots du type décrit dans le US-A-4 560 180 et qui comportent d'une part une plateforme de transport à leur partie inférieure et d'autre part un élément complémentaire de transport à leur partie supérieure, cet élément complémentaire consistant en une corbeille ou un plateau horizontal. La plate-forme inférieure est destinée au transport de marchandises de grandes dimensions, alors que la corbeille ou le plateau supérieur est prévu pour recevoir des marchandises de faibles dimensions. Ces chariots sont plus spécialement destinés à équiper les magasins de vente de matériaux de construction, articles de bricolage et équipements divers.

Dans le but de permettre une plus grande liberté d'utilisation de ces chariots, leur corbeille ou plateau supérieur est monté pivotant sur le châssis de façon à pouvoir être escamoté dans une position verticale afin de libérer tout l'espace situé au-dessus de la plateforme inférieure. Un chariot conçu de cette manière est connu du FR-A-1 423 726. Dans un autre chariot de ce type, le guidage de cet élément mobile dans sa position d'escamotage est assuré par deux glissières verticales s'étendant contre les montants arrière du brancard de manoeuvre et dans lesquelles sont engagés des tourillons portés par les côtés de cet élément, ces tourillons matérialisant l'axe horizontal de pivotement de celui-ci.

Par ailleurs, les chariots de ce genre sont agencés de façon à pouvoir être emboîtés les uns dans les autres lorsqu'ils sont en attente d'utilisation. Toutefois un tel emboîtement n'est possible que si la corbeille ou le plateau supérieur de tous les chariots a été au préalable placé dans sa position verticale d'escamotage. Or ceci constitue une contrainte très gênante.

De plus lorsque l'élément de transport, prévu à la partie supérieure des chariots, consiste en une corbeille, la profondeur d'emboîtement des chariots est relativement limitée. Ceci est dû au fait qu'en position verticale d'escamotage chaque corbeille fait saillie à l'arrière du brancard de manoeuvre du chariot correspondant, et ce sur une distance correspondant à peu près à sa profondeur. Là encore il s'agit d'un inconvénient gênant, car l'encombrement d'une file de chariots en attente est plus important que dans le cas de chariots d'achat classiques à corbeille fixe.

C'est pourquoi la présente invention a pour but de réaliser des chariots d'achat du type en cause qui sont pourvus d'une corbeille supérieure pivotante, mais conçus de façon à éviter les inconvénients exposés ci-dessus. A cet effet, la conception de ces chariots est telle que dans leur position verticale d'escamotage les corbeilles pivotantes ne limitent pas la profondeur d'emboîtement de ces chariots. Cependant la conception de ceux-ci est également telle que ces derniers puissent être emboîtés les uns dans les autres, même lorsque leur corbeille de transport est laissée dans sa position horizontale d'utilisation.

A cet effet, le chariot selon l'invention est essentiellement caractérisé en ce que :

- d'une part les deux glissières de guidage des tourillons de la corbeille pivotante, lesquelles sont disposées dans deux plans verticaux parallèles à l'axe longitudinal, sont inclinées de façon que leur extrémité inférieure soit située plus en avant que leur extrémité supérieure, afin qu'en position verticale d'escamotage, la corbeille pivotante se trouve placée entre les deux montants du brancard de manoeuvre sans faire saillie à l'arrière de celui-ci,
- d'autre part cette corbeille pivotante est fermée à l'arrière par un volet monté librement pivotant à l'endroit de son bord supérieur et elle présente une forme permettant son emboîtement à travers l'extrémité arrière de la corbeille similaire d'un autre chariot identique.

Ainsi, les chariots selon l'invention peuvent être emboîtés aussi bien quand toutes les corbeilles de transport sont disposées à l'horizontale que lorsque celles-ci sont escamotées. Il convient alors d'emboîter ensemble les chariots dont les corbeilles de transport se trouvent dans la même position, ce qui amène à constituer deux files distinctes de chariots en attente.

Cependant, dans une forme de réalisation avantageuse du chariot d'achat selon l'invention, la corbeille pivotante de celui-ci présente une longueur telle qu'en position verticale d'escamotage cette corbeille laisse subsister, au-dessus d'elle, un espace libre de hauteur suffisante pour permettre le passage de la corbeille similaire d'un autre chariot identique. Les chariots selon cette forme de réalisation peuvent alors être emboîtés les uns dans les autres, même si dans certains d'entre eux la corbeille pivotante est en position horizontale alors que dans d'autres cette même corbeille est en position verticale d'escamotage.

D'autres particularités et avantages du chariot d'achat selon l'invention apparaitront au cours de la description suivante. Celle-ci est donnée en référence au dessin annexé à simple titre indicatif, et sur lequel :

La figure 1 est une vue en perspective d'un chariot selon l'invention.

La figure 2 est une vue schématique en élévation illustrant le mode de basculement de la corbeille pivotante de ce chariot.

La figure 3 est une vue partielle en élévation sur laquelle la corbeille pivotante est représentée en position horizontale d'utilisation, l'extrémité avant de la corbeille d'un autre chariot en cours d'emboîtement étant représentée en traits mixtes.

La figure 4 est une vue partielle en élévation sur laquelle la corbeille pivotante est représentée en position verticale d'escamotage, la partie correspondante d'un autre chariot voisin étant représentée en traits mixtes.

La figure 5 est une vue en élévation de deux chariots correspondant à un autre mode de réalisation et qui sont représentés après emboîtement, la corbeille de l'un étant dans sa position horizontale d'utilisation et celle de l'autre dans sa position verticale d'escamotage.

La figure 6 est une vue partielle en élévation d'une variante du système de montage de la corbeille pivotante prévue dans sa forme de réalisation.

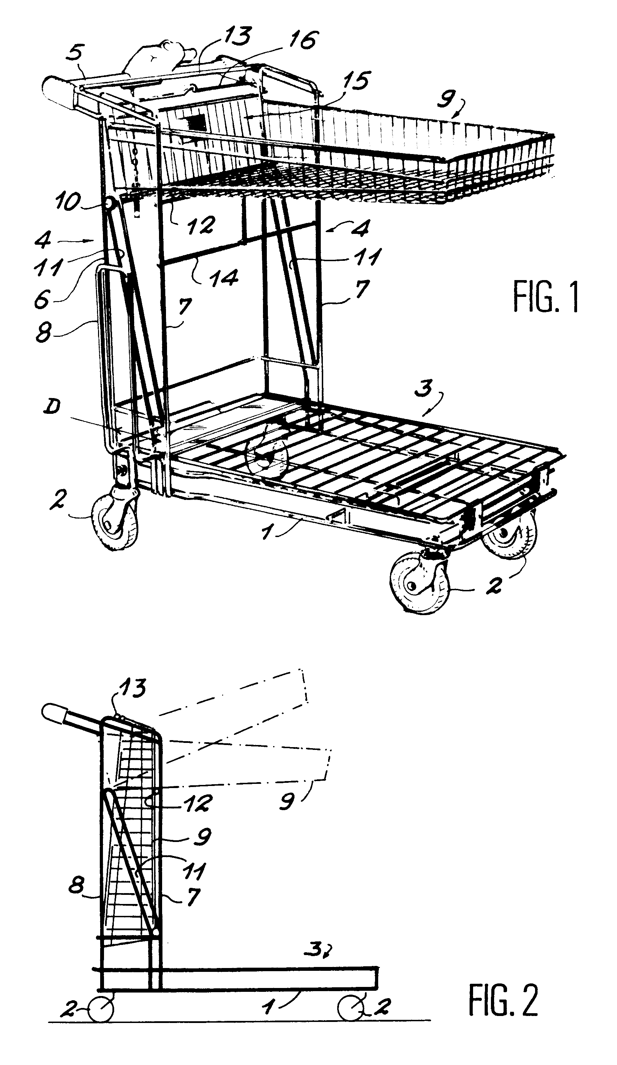

Le chariot représenté aux figures 1 à 4 comporte un socle inférieur 1 monté sur quatre roulettes 2. Ce châssis porte une plateforme de transport 3 pouvant recevoir des marchandises et objets relativement encombrants, cette plateforme étant avantageusement constituée par un grille en fils métalliques. De façon à permettre l'emboîtement de plusieurs chariots de ce genre les uns dans les autres en attente d'utilisation, le châssis inférieur 1 est constitué par une ceinture ouverte à l'arrière et qui présente un contour trapézoïdal. Dans le même but, la plateforme 3 est montée articulée sur le châssis 1 à son extrémité avant et son extrémité arrière repose simplement sur des supports prévus sur ce châssis. Ceci permet le soulèvement de la partie arrière de cette plateforme lors de l'emboîtement de deux chariots l'un dans l'autre.

A son extrémité arrière le châssis 1 porte un brancard de manoeuvre constitué par deux montants 4 dont les extrémités supérieures sont réunies par une traverse 5 destinée à servir de poignée de manoeuvre. Chacun des montants de ce brancard est formé par deux tubes ou fils métalliques 6 et 7 dont les extrémités inférieures sont fixées sur le socle 1. Sur l'un des côtés au moins de ce brancard, il peut être prévu un support permettant de placer sur le chariot des articles relativement longs, tels que des planches, des baguettes de menuiserie, des tringles à rideaux, etc. Ce support peut être constitué par un arceau métallique 8 s'étendant verticalement en regard de l'un des montants du brancard de manoeuvre et à quelque distance de celui-ci.

A sa partie supérieure le présent chariot comporte une corbeille de transport 9 de faible profondeur, les parois de celles-ci étant avantageusement constituées par des grilles en fils métalliques. Cette corbeille est montée pivotante autour d'un axe horizontal qui est matérialisé par deux tourillons saillants 10 portés par l'un et l'autre coins inférieurs arrière des parois latérales de cette corbeille. Chacun de ces tourillons est engagé à l'intérieur d'une glissière 11 constituée par deux fils métalliques parallèles. Ces deux glissières sont disposées dans deux plans verticaux parallèles à l'axe longitudinal du chariot. Cependant, ainsi qu'il ressort des dessins, ces glissières sont inclinées de façon que leur extrémité inférieure soit située plus en avant que leur extrémité supérieure et ce, d'une distance D.

A cet effet, chacune des glissières 11 s'étend en diagonale entre les deux tubes ou fils métalliques 6 et 7 constituant le montant latéral correspondant 4 du brancard, un intervalle suffisant étant prévu entre ces deux tubes ou fils. Ainsi, l'extrémité supérieure de chaque glissière est solidarisée avec l'élément arrière 6, cependant que l'extrémité inférieure l'est avec l'élément avant 7.

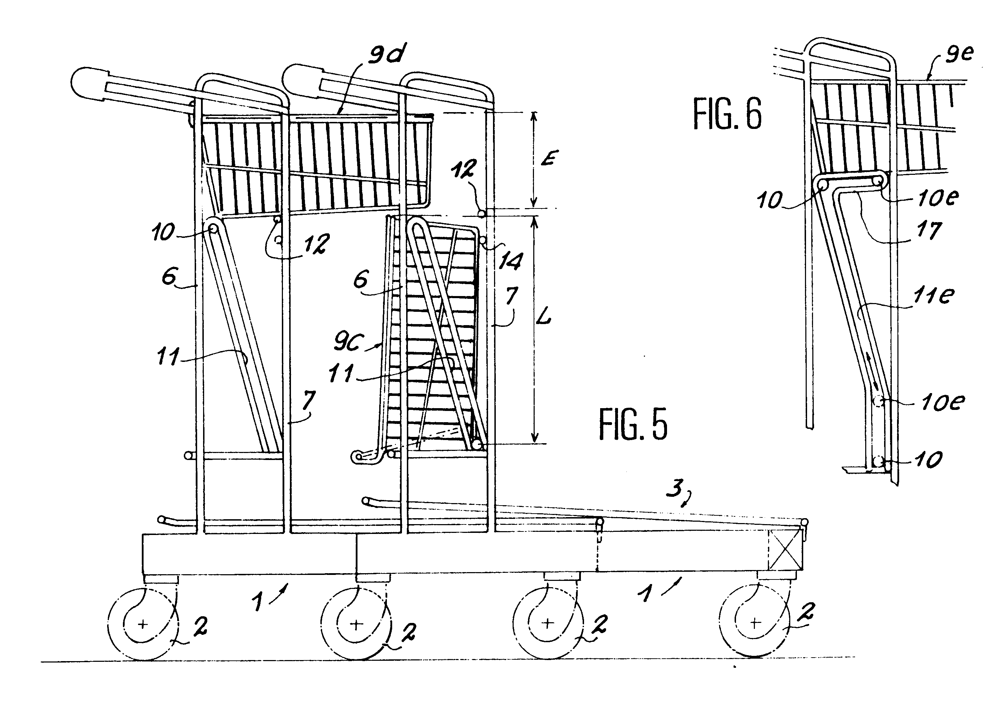

Dans sa position horizontale d'utilisation, la corbeille 9 repose sur une traverse horizontale 12 disposée entre les deux tubes avant 7 des montants du brancard de manoeuvre. Ceci lui assure une parfaite stabilité tout en lui permettant de pouvoir supporter des objets relativement lourds. Cependant cette corbeille peut être amenée dans la position verticale d'escamotage représentée à la figure 4 par pivotement autour de l'axe horizontal constitué par les deux tourillons 10, puis par coulissement de ces derniers dans les glissières 11 jusqu'à l'extrémité inférieure de celles-ci. Pour cette manoeuvre, il convient alors de relever tout d'abord cette corbeille à la verticale, dans la position représentée en traits pleins sur la figure 2, puis de laisser les tourillons 10 coulisser dans les glissières 11 jusqu'au bas de ces dernières.

Cependant il convient de noter que du fait même de l'inclinaison prévue pour ces glissières, ce mouvement provoque un déplacement des coins correspondants de la corbeille 9 vers l'avant. En conséquence, après avoir été amenée en position verticale d'escamotage, cette corbeille ne fait pas saillie vers l'arrière par rapport au brancard de manoeuvre, ou tout au moins ne fait que très légèrement saillie. Par contre, si les glissières avaient été verticales, comme cela est le cas comme dans les chariots actuels du type considéré, cette corbeille aurait alors fait en majeure partie saillie à l'arrière du brancard de manoeuvre, ce qui aurait réduit les possibilités d'emboîtement des chariots les uns à l'intérieure des autres.

Pour obtenir le résultat recherché, l'écartement entre les deux tubes ou fils 6 et 7, constituant chaque montant du brancard de manoeuvre, est tel que les glissières 11 disposées en diagonale entre ces éléments se trouvent suffisamment inclinées pour que dans sa position verticale d'escamotage, la corbeille pivotante 9 ne fasse pratiquement pas saillie à l'arrière du chariot.

Dans cette position d'escamotage, la corbeille 9 se trouve empêchée de basculer vers l'arrière par une traverse horizontale 13 prévue à l'extrémité supérieure du brancard de manoeuvre. Elle se trouve également empêchée de basculer vers l'avant par la traverse 12 déjà mentionnée et une autre traverse horizontale 14 prévue au-dessous de celle-ci.

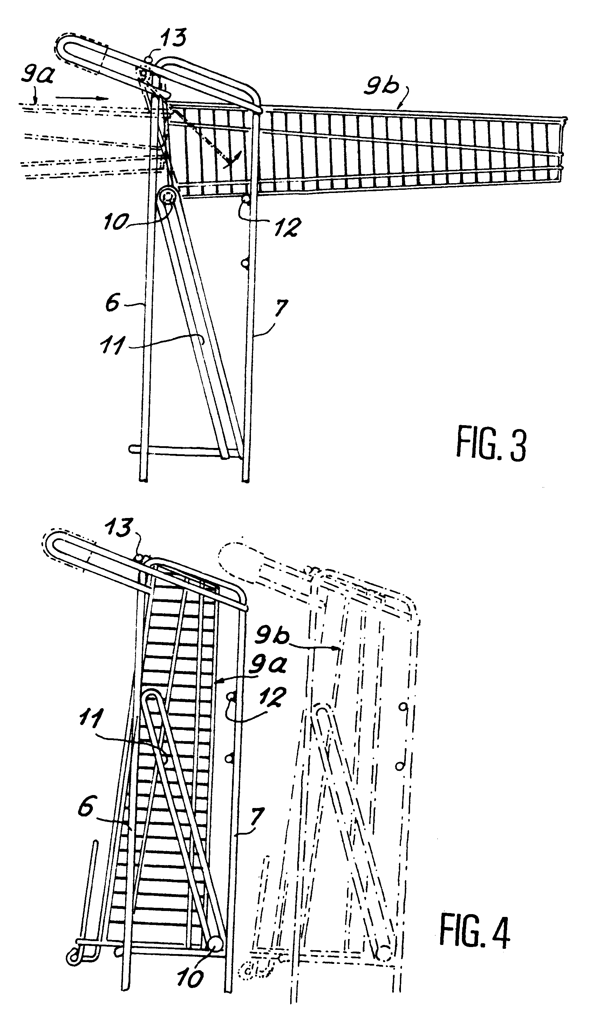

Selon une autre caractéristique du présent chariot, la corbeille 9 de celui-ci est fermée à l'arrière par un volet mobile 15 suspendu à un axe horizontal 16 et monté librement pivotant autour de celui-ci. Par ailleurs, cette corbeille présente une forme permettant son emboîtement à travers l'extrémité arrière de la corbeille similaire d'un autre chariot identique. Ainsi, comme représenté sur la figure 3, il est possible d'emboîter deux chariots selon l'invention l'un dans l'autre lorsque leur corbeille supérieure se trouve placée dans sa position horizontale d'utilisation. Dans un tel cas, l'extrémité avant de la corbeille 9a du chariot située en arrière vient soulever le volet mobile arrière 15 de la corbeille 9b du chariot situé devant.

Toutefois, comme représenté sur la figure 4, ces chariots peuvent également être emboîtés les uns dans les autres lorsque leur corbeille de transport 9a et 9b se trouve placée en position verticale d'escamotage. Contrairement aux chariots actuels du type en cause, il est donc possible d'emboîter les présents chariots aussi bien dans un cas que dans l'autre, sous réserve que dans tous les chariots d'une même file les corbeilles de transport soient dans la même position, c'est-à-dire soit à l'horizontale, soit à la verticale. Mais il suffit alors de constituer deux files distinctes correspondant à l'un et l'autre de ces deux cas.

Cependant la figure 5 représente une autre forme de réalisation spécialement conçue pour qu'il soit possible d'emboîter les chariots selon l'invention, même si dans certains d'entre eux la corbeille de transport est en position horizontale alors que dans d'autres cette même corbeille est en position verticale.

A cet effet, la corbeille de transport 9c des chariots correspondants présente une longueur L plus réduite que dans le cas précédent. Cette longueur est telle qu'en position verticale cette corbeille laisse subsister, au-dessus d'elle, un espace libre E permettant le passage de la corbeille similaire 9d d'un chariot identique placé derrière. Ceci constitue un avantage extrêmement important car les utilisateurs, ainsi que le personnel d'entretien, peuvent emboîter les chariots sans prendre la précaution de vérifier que leur corbeille de transport se trouve dans la même position dans chaque file.

Abstraction faite de cette différence, les chariots selon la figure 5 présentent la même structure que dans la forme de réalisation précédente. En effet, la corbeille de chacun d'eux est montée pivotante autour d'un axe horizontal matérialisé par deux tourillons 10 portés par les coins inférieurs arrière des parois latérales de cette corbeille. Par ailleurs ces tourillons sont engagés dans des glissières 11 qui, de même que dans le cas précédent, présentent une inclinaison provoquant un déplacement vers l'avant des coins correspondants de chaque corbeille lorsque celle-ci est amenée en position verticale d'escamotage.

De plus, il convient de noter que la réduction de capacité des corbeilles, qui est due à la limitation de leur longueur, peut être compensée par un accroissement de leur profondeur. A cet effet, il peut être prévu un plus grand espacement entre les deux fils ou tubes 6 et 7 constituant les montants latéraux du brancard de manoeuvre afin que les glissières 11 puisse être plus fortement inclinées.

La figure 6 représente une variante de réalisation dans laquelle les glissières latérales de guidage 11 prévues précédemment sont remplacées par des glissières 11e dont l'extrémité supérieure présente un coude 17 dirigé vers l'avant. Par ailleurs, la corbeille correspondante 9e porte un tourillon supplémentaires 10e en plus de tourillon 10 situé à l'endroit de chacun des coins inférieurs arrière de ses parois latérales. Ces tourillons supplémentaires sont engagés dans la partie coudée de la glissière 11e lorsque cette corbeille se trouve placée dans sa position horizontale d'utilistion. Lors du basculement de cette même corbeille dans sa position verticale d'escamotage, les deux tourillons 10 et 10e de chaque côté sont amenés à coulisser dans la glissière 11e, comme représenté en traits mixtes sur la figure 6. Les axes 10 et 10e empêchent que la corbeile puisse basculer vers l'avant ou vers l'arrière, lorsqu'elle se trouve dans sa position verticale. Ce axes jouent en quelque sorte le même rôle que les traverses 13 et 14.

Mais de nombreuses autres variantes et modifications peuvent évidemment être envisagées pour le chariot d'achat selon l'invention. Il convient de noter qu'un avantage accessoire, résultant de la disposition particulière des glissières de guidage 11 et 11e, consiste en ce que l'inclinaison de celles-ci a pour effet de freiner légèrement le mouvement de descente de la corbeille pivotante correspondante 9 ou 9e, en évitant ainsi une chute brutale de celle-ci lors de sa manoeuvre d'escamotage. Mais le principal avantage des chariots selon l'invention réside évidemment dans le fait que les conditions d'emboîtement de ceux-ci sont grandement améliorées aussi bien quand leur corbeille pivotante est en position verticale d'escamotage que lorsque celle-ci est en position horizontale.

**Revendications**

1. Chariot d'achat comportant, à sa partie supérieure, une corbeille horizontale de transport montée pivotante sur son châssis de façon à pouvoir être escamotée dans une position verticale à l'arrière de ce chariot, grâce à deux glissières latérales de guidage dans lesquelles sont engagés des tourillons portés par les côtés de cette corbeille pivotante et matérialisant son axe horizontal de pivotement, caractérisé en ce que :
    - d'une part ces deux glissières de guidage (11, 11e), qui sont disposées dans deux plans verticaux parallèles à l'axe longitudinal, sont inclinées de façon que leur extrémité inférieure soit située plus en avant que leur extrémité supérieure, afin qu'en position verticale d'escamotage, la corbeille pivotante (9, 9e) se trouve placée entre les deux montants latéraux (4) du brancard arrière du chariot sans faire saillie à l'arrière de celui-ci ;
    - d'autre part cette corbeille pivotante (9, 9e) est fermée à l'arrière par un volet (15) monté librement pivotant à l'endroit de son bord supérieur et elle présente une forme permettant son emboîtement à travers l'extrémité arrière de la corbeille similaire (9, 9e) d'un autre chariot identique, ce qui permet l'emboîtement de tels chariots aussi bien quand toutes les corbeilles de transport sont disposées à l'horizontale que lorsque celles-ci sont escamotées.

2. Chariot d'achat selon la revendication 1, caractérisé en ce que les montants latéraux (4) du brancard de manoeuvre étant constitués chacun par deux tubes ou fils métalliques (6, 7), les glissières de guidage (11, 11e) sont disposées en diagonale entre ces deux tubes dont l'écartement est déterminé de façon que ces glissières soient suffisamment inclinées pour qu'en position verticale d'escamotage la corbeille pivotante (9, 9e) ne fasse pratiquement pas saillie à l'arrière du chariot.

3. Chariot d'achat selon la revendication 1 ou 2, caractérisé en ce que la longueur (L) de la corbeille pivotante (9e) est telle qu'en position verticale d'escamotage celle-ci laisse subsister, au-dessus d'elle, un espace libre (E) permettant en plus le passage de la corbeille similaire (9e) d'un autre chariot identique, alors que cette corbeille est dans sa position horizontale, et ce de façon à permettre l'emboîtement de ces chariots.

**Claims**

1. A shopping cart comprising at its upper portion an horizontal transport basket pivotally mounted on the cart frame so that it may be retracted in a vertical position at the rear of said cart, with the help of two lateral guiding slides in which are engaged trunnions carried by the sides of said pivotable basket and defining its horizontal pivotal axis, **characterized** in that :
    - on the one hand, these two guiding slides (11, 11e) which are arranged in two vertical planes parallel to the longitudinal axis are inclined in such manner that their lower end is located ahead of their upper end, in order that the pivotable basket (9, 9e) being in its vertical retracted position will find itself placed between the two lateral uprights (4) carrying the handlebar at the rear of the cart without protruding rearwardly beyond said handlebar;
    - on the other hand, this pivotable basket (9, 9e) is closed at its rear by a flap (15) mounted so as to swivel freely from its upper edge, and said basket has a shape allowing it to be nested through the rear end of the similar basket (9, 9e) of another identical cart, thus allowing such carts to be mutually nested, both when all the transport baskets are in an horizontal position as well as when they are retracted.

2. A shopping cart according to Claim 1, characterized in that, while the lateral uprights (4) carrying the handlebar are each formed of two metal tubes or wires (6, 7), the guiding slides (11, 11e) are disposed diagonally between said two tubes, the spacing of which is determined in such manner that these slides will be sufficiently inclined for achieving that the pivotable basket (9, 9e) being in its vertical retracted position will practically not protrude beyond the rear end of the cart.

3. A shopping cart according to Claim 1 or Claim 2, characterized in that the length (L) of the pivotable basket (9e) is such that, when said basket is in its vertical retracted position, it allows a free space (E) to subsist above said basket, said free space affording moreover a passage for the similar basket (9e) of another identical cart while said basket is in its horizontal position, thus allowing these carts to be nested.

## Patentansprüche

1. Einkaufswagen mit einem schwenkbaren Korb in seinem oberen Bereich, der auf dem Fahrgestell aus einer horizontalen Transportstellung in eine vertikale Stellung hinten am Einkaufswagen vermittels zweier seitlicher Gleitbahnen einschwenkbar ist, in die Lagerzapfen eingreifen, die an den Seiten des schwenkbares Korbs sitzen und seine horizontale Schwenkachse bilden, dadurch gekennzeichnet,
    - daß einerseits die beiden Gleitbahnen (11, 11e), die in zwei Vertikalebenen parallel zur Längsmittelebene angeordnet sind, in der Weise geneigt vorgesehen sind, daß sich ihr unteres Ende weiter nach vorn als ihr oberes Ende erstreckt, damit sich der schwenkbare Korb (9, 9e) in seiner vertikalen Stellung zwischen den beiden seitlichen Stützen (4) des Gestells hinten am Einkaufswagen befindet, ohne nach hinten auszukragen, und
    - daß andererseits der schwenkbare Korb (9, 9e) nach hinten durch eine Schwenkklappe (15) begrenzt wird, die frei schwenkbar an ihrem oberen Rand aufgehängt ist, und der eine Gestalt besitzt, die das Ineinanderschieben durch die hinteren Gestellteile an einem ähnlichen Korb (9, 9c) eines identischen Einkaufswagens gestattet, so daß das Ineinanderschieben der Einkaufswagen sowohl dann möglich ist, wenn sich sämtliche Körbe in der horizontalen Stellung befinden als auch dann, wenn die Körbe verschwenkt sind.

2. Einkaufswagen nach Anspruch 1, dadurch gekennzeichnet, daß die seitlichen Stützen (4) des Betätigungsgestells jeweils aus zwei Rohren oder Metalldrähten (6, 7) bestehen, daß die Gleitbahnen (11, 11e) in der Diagonalen zwischen den beiden Rohren angeordnet sind, deren Abstand in der Weise festgelegt ist, daß die Gleitschienen ausreichend geneigt angeordnet sind, damit der schwenkbare Korb (9, 9c) in der vertikalen Schwenklage praktisch nicht nach hinten auskragt.

3. Einkaufswagen nach Anspruch 1 oder 2, dadurch gekennzeichnet, daß die Länge (L) des schwenkbaren Korbs (9e) so bemessen ist, daß er in der vertikalen Schwenklage über sich einen freien Abstand (E) zur Verfügung stellt, der den Durchtritt eines identischen Korbs (9e) eines identischen Einkaufswagens dann ermöglicht, wenn sich dieser Korb in der horizontalen Stellung befindet, und zwar so, daß das Ineinanderschieben der Einkaufswagen möglich ist.

FIG. 1

FIG. 2

FIG. 3

FIG. 4

FIG. 6

FIG. 5

9d

9e

10

10e

17

11e

10e

10

12

12

10

6

6

11

11

9c

7

7

14

E

L

3

1'

1'

2

2

2

2

2

2

2

2

EP 0 337 043 B1